# EUROPEAN PATENT APPLICATION

(11) **EP 0 820 017 A2**
(43) Date of publication of application: **21.01.1998**
(21) Application number: 97304883.8
(22) Date of filing: 03.07.1997
(51) Int. Cl.: G06F 12/14

(54) **Secondary storage data protection apparatus placing encryption circuit in I/O subsystem**

(30) Priority: 19.07.1996 GB 9615162
(71) Applicant: International Business Machines Corporation, Armonk, N.Y. 10504 (US)
(72) Inventor: Mansour, Yishai, Tel-Aviv (IL); Novick, Yoram, Ramot Sapir, Haifa (IL)
(74) Representative: Moss, Robert Douglas

(57) **Abstract**

An "on-line" data protection apparatus for secondary storage devices involves placing encryption/decryption hardware (23) inside of the I/O subsystem (2) which forms the interface between the host computer 1 and the secondary storage devices (3a-3n). All data being transferred between the host computer and the storage devices is encrypted/decrypted by this hardware.

## Description

### Field of the Invention

The present invention relates to the data storage environment, and specifically, to an apparatus for protecting data which is stored in storage devices so that unauthorized users cannot gain access to the data.

### Background of the Invention

As the information technology revolution continues to grow, confidential data has become among a company's strongest assets, and the goal of Quickly and securely accessing this data has been raised to the forefront. If a competitor can easily gain access to a company's confidential data, many financial resources dedicated to research, development, marketing etc., as well as a time-critical competitive edge, will be lost.

In a typical data processing environment, data is stored on so-called "secondary storage" devices, usually magnetic disks. When data is stored to these disks during periods of non-use of the data, a common security measure, called data encryption, is commonly used to attempt to restrict access to the data. Such encryption techniques are well known (see, e.g., Gustarus J. Simmons, *Contemporary Cryptography: The Science of Information Integrity,* IEEE Press, 1992) and have long been used in various fields in addition to data storage, such as data communications.

Basically, the unsecured data is passed into an encryption/decryption circuit which uses a special encryption key to code the data so that the encrypted output is no longer recognizable as the original data. The encrypted data is then stored to secondary storage. When the encrypted data is to be retrieved from secondary storage, it is passed back into the encryption/decryption circuit where the key is again used, this time to decrypt the encrypted data back to the original data.

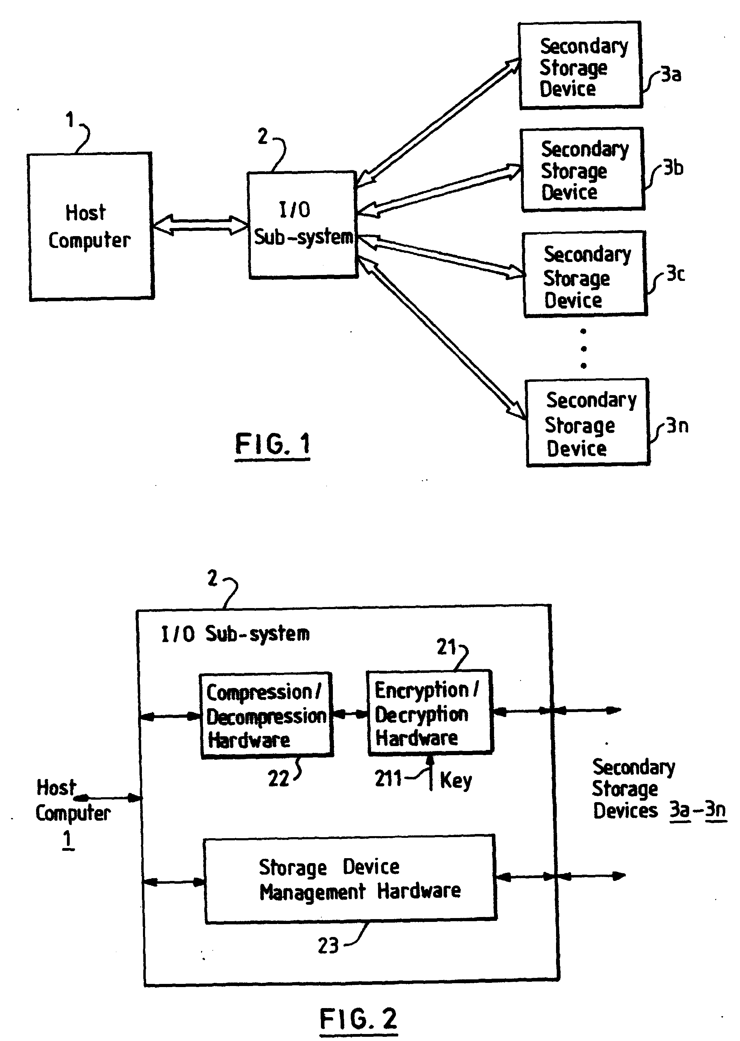

A typical data processing/data storage environment can be modelled by the simple block diagram shown in Fig. 1. A host computer 1 performs the data processing operations (using a central data processor) on data stored in "primary storage" (e.g. semiconductor memory chips) located inside the host computer 1. When the host computer 1 has no immediate use for certain data, it can store the data onto a plurality of secondary storage devices 3a-3n by passing the data through a central I/O (Input/Output) sub-system 2 which acts as an intermediary between the host computer and the storage devices. The I/O subsystem 2, for example, decides which of the plurality of storage devices 3a-3n to send data to, provides the appropriate timing signals, compresses the data for more compact storage and generally manages the secondary storage devices and their relationship to the host computer 1. When the host computer 1 desires to access data stored on the secondary storage, the I/O subsystem 2 performs similar functions to retrieve stored data and send it to the host computer 1.

In US Patent No. 5,235,641, assigned to Hitachi, Ltd. of Tokyo, Japan, the encryption/decryption circuitry is placed inside each of the plurality of secondary storage devices 3a-3n. This has the disadvantage of requiring the encryption/decryption circuitry to be repeated in each storage device, requiring much excess hardware. Another disadvantage is that if one of the secondary storage devices needs to be sent to an external site for repair, outsiders can gain access to the stored data, because the encryption/decryption circuit, and its associated key, is present inside the storage device. The outsider would simply have to connect the data storage device to another host computer and I/O subsystem in order to decrypt the data and study its contents. On the other hand, the advantage gained by the above approach is that the host computer is freed from having to perform the data encryption/decryption, which involves much processing time and basically ties up the host's central processor preventing it from performing other important tasks (such as running programs and responding to user requests). For example, in another prior art teaching, *IBM Technical Disclosure Bulletin,* Vol. 30 No. 3, August 1987, the encryption/decryption operations are performed inside the host computer 1, and the central processor inside of host computer 1 is generally tied up by the encryption/decryption tasks for long periods of time, thus greatly detracting from the host computer's efficiency.

### Summary of the Invention

The present invention provides data protection for data stored on secondary storage in which the host computer is not tied up by encryption/decryption tasks yet the encrypted data stored on secondary storage is still protected from outside access if the secondary storage device is sent off-site, for example, for repair or maintenance.

According to one aspect of the present invention, in a data processing/storage apparatus, a host computer is provided for performing basic data processing tasks and an I/O subsystem is connected to the host computer for managing data being transferred between the host computer and at least one secondary storage device. Encryption/decryption circuitry is included within the I/O subsystem. This provides an enhanced level of data protection with a negligible impact on the host computer.

According to another aspect, the invention provides an I/O subsystem circuit as claimed in Claim 4.

### Brief Description of the Drawings

Fig. 1 is a basic block diagram of a computer system to which the present invention is directed; and
Fig. 2 shows a preferred embodiment of the I/O sub-system according to the present invention.

### Detailed Description of the Preferred Embodiments

In this disclosure, a basic computer system will be discussed as being made up of a host computer, I/O subsystem and at least one secondary storage device. The detailed composition of these basic elements will not be described, as they are well known. The host computer 1 of Fig. 1 contains the central processing unit (CPU), main memory (semiconductor "primary" memory) and additional hardware to interconnect the various hardware components. The host computer 1 runs the operating system (basic software used to coordinate the overall computer system's mechanics) as well as basic applications (word processing, spreadsheets etc.) and user processes. The I/O subsystem 2 is responsible for managing the secondary storage devices 3a-3n and provides an interface between the host computer and the storage devices.

The I/O subsystem according to a preferred embodiment of the present invention is shown in Fig. 2. Data to be written to secondary storage is passed from host computer 1 to compression/decompression hardware 22 located in I/O sub-system 2 where the data is compressed, according to well-known techniques, so that less physical data need be stored on the secondary storage devices. The compressed data is then input to encryption/decryption hardware 21 where the compressed data is encrypted, by the use of an encryption key 211 and sent out of the I/O sub-system for writing to secondary storage.

The details of the encryption/decryption circuit 21 are well known to the skilled artisan. For example, the well known block cipher encryption technique (e.g., DES) can be used, thus guaranteeing that the size of the encrypted data is the same size as the original data, resulting in no additional space management complexity in adding the encryption hardware.

The encryption key 211 is used to transform the data into encrypted form so that it is unrecognizable. To avoid unauthorized access to stored data, the encryption key 211 can be made dynamic, meaning the host computer sends the encryption key to the I/O sub-system for use by hardware 21. This way, the host computer can send the key 211 to a substitute I/O subsystem unit in case the original unit has experienced failure. This involves a small change in the host computer's operating system code, which is readily apparent to the skilled artisan.

Because encryption is being performed "on-line" (the data is encrypted as it is passing from the host computer to the storage devices), the transfer rate of the encryption hardware should be higher than that of the secondary storage devices. This will avoid delays in data access which might otherwise be caused by the added encryption hardware.

It should be noted that the inclusion of the compression/ decompression hardware 22 is merely optional and is not an essential feature of the invention. However, if it is used, it is preferable to place the encryption hardware between the compression hardware and the secondary storage devices so that the use of encryption will not degrade the impact of data compression.

As is well known, the I/O sub-system also contains storage device management hardware 23 for providing the proper handshaking between the host computer 1 and the secondary storage devices 3a to 3n, such as storage device selection, address interleaving, error detection/correction, synchronization etc.

When data is to be read from secondary storage, the reverse operation takes place, and encrypted compressed data is decrypted by encryption/decryption hardware 21 and decompressed by compression/decompression hardware 22 before it is sent back to host computer 1. The storage device management hardware 23 again provides the proper handshaking (e.g., initialization tasks) to accomplish the physical data transfer.

Recent advances in solid state technology has enabled the development of low cost encryption hardware. Thus, the disclosed solution can be cheaply implemented in existing systems to provide a highly secure way of protecting stored data with negligible impact on the host computer.

The present invention is not to be limited by the above-described preferred embodiments, but only the spirit and scope of the appended claims.

## Claims

1. A computer system having a host computer (1), at least one secondary storage device (3a-3n) and an I/O sub-system (2) which interfaces between the host computer and the at least one secondary storage device, characterised in that said I/O sub-system includes encryption/decryption means (21) for encrypting data as it passes from the host computer to the secondary storage device and decrypting data as it passes from the secondary storage device to the host computer.

2. The computer system of claim 1 wherein a key (211) for use by said encryption/decryption means (21) is passed from said host computer (1) to said I/O sub-system (2).

3. The computer system of claim 1 wherein compression/decompression hardware (22) is also included in said I/O sub-system (2), between said host computer (1) and said encryption/decryption means (21).

4. An I/O sub-system circuit (2) for placement between a host computer (1) and at least one secondary storage device (3a-3n), characterised in that said I/O sub-system has an encryption/decryption circuit located therein.
